# EUROPÄISCHE PATENTANMELDUNG

(11) **EP 4 806 632 A1**
(43) Veröffentlichungstag der Anmeldung: **16.09.2026**
(21) Anmeldenummer: 26163818.3
(22) Anmeldetag: 10.03.2026
(51) Int. Cl.: B32B 13/02, B32B 13/10, C04B 28/10, C04B 28/12, E04B 1/82, E04C 2/10

(54) **ORGANISCHER FASERVERBUNDWERKSTOFF**

(30) Priorität: 11.03.2025 AT 501582025
(71) Anmelder: Pohl, Julia, 6020 Innsbruck (AT)
(72) Erfinder: Pohl, Julia, 6020 Innsbruck (AT)
(74) Vertreter: Schwarz & Partner Patentanwälte GmbH

(57) **Zusammenfassung**

Die Erfindung betriff ein Verfahren zur Herstellung eines organischen Faserverbundwerkstoffes und einen organischen Faserverbundwerkstoff umfassend Naturfasern und Schäben, vorzugsweise aus Hanf, Wasser und Kalk, vorzugsweise hydraulischen und/oder natürlich hydraulischen Kalk, dadurch gekennzeichnet, dass der Faserverbundwerkstoff mindestens eine Faser-Schicht (1) und mindestens eine Schäben-Schicht (2) aufweist,
wobei die Faser-Schicht (1) aus Naturfasern, Wasser, Kalk und gegebenenfalls weiteren Bindemitteln und Zuschlagstoffen gebildet ist,
wobei die Schäben-Schicht (2) aus Schäben, Wasser, Kalk und gegebenenfalls weiteren Bindemitteln und Zuschlagstoffen gebildet ist.

## Beschreibung

Verfahren zur Herstellung eines organischen Faserverbundwerkstoffs als Bau-, Wärmeisolier-, und/oder Schallisoliermaterial und organischer Faserverbundwerkstoff umfassend Naturfasern und Schäben, Wasser und Kalk.

### HINTERGRUND DER ERFINDUNG

Lärm, Geräusche, Geruch, Gestank, Schimmelbildung, Feuchtigkeit, Schädlinge, Milben - eine ungesunde Innenraumluft - das bekannte "Sick Building Syndrom", wie auch zu hohe CO2 Emissionen in der Bauindustrie, wie zu hohe Mengen an Sondermüll bei Abriss von Gebäuden führen vermehrt zu gesundheitlichen Problemen, Umweltbelastungen und Luft-, Wasser- und Bodenverschmutzungen.

Dem entgegenwirken könnten natürliche Materialkombinationen, welche biologisch abbaubar sind. Ein Beispiel eines solchen Materials ist Hanf.

Hanf zählt zu den ältesten Nutz- und Zierpflanzen der Erde. Der nachwachsende Rohstoff verfügt über hervorragende Produkteigenschaften, die ihn für die Dämmung zur ersten Wahl machen. Hanf ist als ökologischer Dämmstoff besonders, da er eine herausragende Ökobilanz aufweist. Die Verwendung von Hanf hat einen minimalen ökologischen Fußabdruck und bindet dabei große Mengen an CO2. Beispielsweise wäre weniger als 1% der landwirtschaftlichen Nutzfläche Österreichs notwendig, um die gesamte, jährlich ausgeführte Fassadendämmung in Österreich mit Hanfdämmung auszuführen.

Zudem handelt es sich bei Hanf um ein regionales Produkt, welches durch regionalen Anbau, kurze Transportwege und bei Produktion im Inland eine Herstellung von regionalen Dämmpaneelen ermöglicht.

Hanf ist Bestandteil vieler Baustoffe, da er einige sehr vorteilhafte Merkmale aufweist. Hanf ist hautfreundlich, diffusionsoffen, gut dämmend, widerstandsfähig, weist eine ausgezeichnete mechanische Widerstandskraft auf und ist daher Hagelsicher und äußerst langlebig. Industriehanf ist konventionell bekannt als Nutzpflanze, welche sowohl als Lebensmittel, Textil, Baustoff, Kunststoff uvm. weiterverarbeitet werden kann.

Derzeit findet man Hanf-Kalk-Composite bestehend aus (i) nur den Hanfschäben mit Kalk oder (ii) bestehend aus der gespleisten Hanffaser in Kombination mit zusätzlichen Bindemittel, wie zum Beispiel das organische Bindemittel Kasein. Das sorgt dafür, dass unter anderem eine glatte, also nicht spröde Oberfläche entsteht, wie auch für das "Nichtabfärben" der Oberfläche von Compositen, sprich kein Abrieb von Partikeln.

Hanffaserprodukte, bestehend aus Hanfvliesen werden aus zuvor bearbeiteten Hanfasern (mehrfach gespleißte und vornehmlich kurze Hanffasern) hergestellt. Produkte aus den Hanfvliesen, also gespleiste Hanffasern in Verbindung mit organischen Harzen als Bindemittel sind bekannt. Eine Hanfschäben-Kalk-Kombination ist ebenfalls bekannt und wird auf dem Markt als Wärmedämmziegel angeboten.

Auch akustische Paneele sind im Stand der Technik bekannt, jedoch sind diese nicht dazu ausgelegt, gleichzeitig eine Wärmedämmung zu ermöglichen. Ein rein akustisches Paneel ist bspw. in EP 278 423 3 A1 offenbart. Dort wird auch ein einfaches Herstellungsverfahren für das Paneel mit dreidimensionaler Oberfläche gezeigt.

Der Einsatz von Naturfasern ist jedoch auch häufig mit dem Problem verbunden, dass in Folge der teilweise leichten Entflammbarkeit von biologischen Fasern bzw. deren Empfindlichkeit gegen Schädlinge (Pilze, Bakterien, Insekten, Nagetiere,...) entsprechend chemisch-biologisch wirksame Zusätze erforderlich sind. Um eine entsprechende Schutzwirkung zu erreichen, werden meistens Imprägnierungen mit Salzlösungen oder anderen Substanzen, die als Flammenhemmer, Insektizide, Fungizide dienen vorgenommen, die entweder nur an der Faseroberfläche haften oder durch Nassimprägnierung in die Faser eingebracht wird. Solche Stoffe stellen ein Umweltgefahrenpotenzial dar, da die Stoffe insbesondere bei der Verarbeitung Dioxin entstehen lassen können.

In DE 101 52 545 Al wird ein Verfahren zur Herstellung eines schwer entflammbaren Faserverbundwerkstoffs ohne chemische Zusatzstoffe offenbart. Dieser Faserverbundwerkstoff kann zur Errichtung und Herstellung von Wärme-, Schall- und/oder Stoß-Dämmschichten sowie als Ersatz von Bausteinen aus gebranntem Ton, Formsandkalksteinen und Gasbetonbausteinen verwendet werden.

Im Stand der Technik sind somit natürliche Materialkombinationen für Faserverbundwerkstoffe bekannt, jedoch sind die Einsatzgebiete dieser Faserverbundwerkstoffe begrenzt.

### KURZBESCHREIBUNG DER ERFINDUNG

Aufgabe der vorliegenden Erfindung ist es daher, einen Faserverbundwerkstoff zur Verfügung zu stellen, welcher natürlich abbaubar und wiederverwendbar ist und als Schallisolier-, und Wärmeisoliermaterial geeignet ist, eine erhöhte Druck- und Biegefestigkeit aufweist, äußerst vielfältig eingesetzt werden kann und zudem schwer entflammbar und schimmelresistent ist.

Gelöst wird diese Aufgabe durch einen organischen Faserverbundwerkstoff umfassend Naturfasern und Schäben, vorzugsweise aus Hanf, Wasser und Kalk, vorzugsweise hydraulisch natürlichen Kalk, wobei der Faserverbundwerkstoff mindestens eine Faser-Schicht und mindestens eine Schäben-Schicht aufweist, wobei die Faser-Schicht aus Naturfasern, Wasser, Kalk und optional weiteren Bindemitteln und Zuschlagstoffen gebildet ist, wobei die Schäben-Schicht aus Schäben, Wasser, Kalk und optional weiteren Bindemitteln und Zuschlagstoffen gebildet ist.

Außerdem wird die Aufgabe gelöst durch ein Verfahren zur Herstellung eines organischen Faserverbundwerkstoffes als Bau-, Wärmeisolier-, und/oder Schallisoliermaterial umfassend mindestens eine Faser-Schicht und mindestens eine Schäben-Schicht, umfassend die Schritte
a. Zerkleinern von Faserpflanzen, vorzugsweise Hanf,
b. Aufteilen der zerkleinerten Faserpflanzen in Naturfasern und Schäben,
c. Einbringen der Naturfasern in eine Press-Form und benetzen der Naturfasern mit einem Kalkgemisch umfassend Wasser zur Herstellung einer Faser-Schicht,
d. Benetzen der Schäben mit einem Kalkgemisch umfassend Wasser und Herstellung einer fließfähigen Schäbenmasse zur Herstellung einer Schäben-Schicht,
e. Pressen der Faser-Schicht und/oder einbringen der fließfähigen Schäbenmasse auf die Faser-Schicht in die Press-Form,
f. Optional einbringen weiterer Faser-Schichten und/oder Schäben-Schichten in die Press-Form gemäß Schritten c. - e.,
g. Pressen der Schichten,
h. Entnehmen des gepressten Formkörpers und Härtung und Trocknung, vorzugsweise in einem natürlichen Lufttrocknungsverfahren.

Die natürliche Materialkombination des erfindungsgemäßen Faserverbundwerkstoffes, bevorzugt Hanf und Kalk, ermöglicht einen Faserverbundwerkstoff, der natürlich abbaubar und/oder als selbiges wiederverwendbar ist. Der Faserverbundwerkstoff kann einen mehrschichtigen organischen Naturfaser-Verbund-Baustoff/Werkstoff aus Faser- und Schäben-Schichten bilden.

Zusätzlich weist der Faserverbundwerkstoff und jegliches daraus gebildete Formteil wärmedämmende, schimmelresistente, brandsichere, antibakterielle, schädlingsresistente, feuchtigkeitsregulierende, CO₂ negative Eigenschaften auf. Durch das erfindungsgemäße Verfahren ist es daher möglich, ein einfach herstellbares Formteil, z.B. ein Paneel oder Bauteil, bereit zu stellen, welches zusätzlich positive Effekte erzielt, da sich ein solches Formteil positiv auf das Raumklima auswirkt. Mithilfe des erfindungsgemäßen Verfahrens lässt sich der Schicht-Verbund durch Pressen herstellen. Außerdem ermöglicht die Kombination von Schäben- mit Faser-Schichten eine Erhöhung der Druckfestigkeit und der Biegefestigkeit eines aus dem erfindungsgemäßen Faserverbundwerkstoffes gebildeten Formteils. Daher ist ein solches Formteil aus dem erfindungsgemäßen Faserverbundwerkstoff äußerst variabel einsetzbar und weist ein sehr breites Anwendungsspektrum auf.

Bevorzugt weist die Faser-Schicht eine Reinheit von größer 90% auf, das heißt der Anteil an Fasern in den Naturfasern der Faser-Schicht ist mindestens 90%. Außerdem weist auch die Schäben-Schicht bevorzugt eine Reinheit von größer 90% auf, das heißt der Schäben-Anteil in den Schäben der Schäben-Schicht ist größer als 90%. Dadurch können die besonderen Eigenschaften des Faserverbundwerkstoffs ermöglicht werden.

Besonders bevorzugt umfasst die Faser-Schicht im Wesentlichen nur Fasern und keine Schäben und die Schäben-Schicht umfasst im Wesentlichen nur Schäben und keine Fasern.

Das Füllmaterial des Faserverbundwerkstoffs ist biogenen Ursprungs. Unter biogenen Ursprung ist dabei zu verstehen, dass das Füllmaterial biologischen bzw. organischen Ursprungs ist bzw. durch Leben oder Lebewesen entstanden ist. Besonders bevorzugt ist das Füllmaterial Hanf, doch auch Holz, Kork, Reed, Bambus, Stroh, Flachs, Kenaf, Brennnesseln, Bambus, Wolle, Zellulose, Jute, Schilf, Baumwolle, Holzfasern oder Mischungen daraus können verwendet werden. Hanf wird bei der Verwendung der Schäben, wie auch Fasern bevorzugt, da dieser Rohstoff besonders positiv für das Raumklima und die Umwelt ist.

Holz liegt bevorzugt sortenrein und in grober Spanform vor.

Bevorzugt bildet mindestens eine Faser-Schicht die Außenseite bzw. Oberfläche des Formteils. Dadurch lässt sich eine homogene, glatte Oberfläche erreichen. Die Oberfläche des Formteils muss somit weder verputzt noch verkleidet werden.

Für eine erste Schicht, welche bevorzugt einer Faser-Schicht entspricht und die Oberfläche bildet, wird die Hanffaser bevorzugt, doch besteht auch die Möglichkeit andere Naturfasern zu verwenden, wie z.B. Flachsfasern/Leinen, Jute, Kokosfasern, Ramie, Sisal, Abaca (Manila-Hanf) oder tierische Fasern, wie Wolle, Seide, Kaschmir, Alpaka, Mohair, Lama, Kamelhaar, Angorawolle, usw.

In einer anderen Ausführungsvariante wird die Außenseite, das heißt die erste Schicht, des Formteils von einer Schäben-Schicht gebildet. Diese kann dann mit einer Faser-Schicht verpresst werden.

In einer Ausführungsvariante ist vorgesehen, dass dem Formteil über die gesamte Oberflächenschicht (erste Schicht), welche einer Faser-Schicht entspricht, mindestens ein Bindemittel beigemischt wird und die dahinterliegende zweite Schicht einer Schäben-Schicht aus einem natürlichen Füllmaterial entspricht.

Die Faser-Schicht und Schäben-Schicht können beliebig oft abwechselnd geschichtet werden.

Bevorzugt umfasst die Faser-Schicht mindestens ein organisches Bindemittel. Außerdem kann auch die Schäben-Schicht mindestens ein organisches Bindemittel umfassen.

Weiters kann vorgesehen sein, dass das Bindemittel ausgewählt ist aus der Gruppe Wasserglas, Methylzellulose, Leinöl, Kaseinleim, Stärkeleim, Puzzolan, Casein, Kalkcasein oder Kombinationen daraus. Bevorzugt sind Bindemittel biogenen Ursprungs. Besonders bevorzugt ist das mindestens eine Bindemittel ausgewählt aus der Gruppe Methylzellulose, Leinöl, Glutin Leim, Kaseinleim, Stärkeleim, Puzzolan, Casein, Kalkcasein oder andere. Besonders bevorzugt vorgesehen ist eine Kombination daraus. Die Wahl des Bindemittels beeinflusst die Wasserbeständigkeit sowie die mechanischen und schallakustischen Eigenschaften des Faserverbundwerkstoffes. Je nach dem welches Bindemittel verwendet wird, oder welche Kombination daraus, wird das Formteil flexibel/steif/elastischer, druckfest/nachgiebig, schwer/leicht, billig/teuer, glatt/porös, usw. Das heißt, das Bindemittel kann an die Verwendung des Formteils angepasst werden und ermöglicht ein äußerst vielseitiges Einsatzspektrum des Faserverbundwerkstoffes.

Weitere mögliche Bindemittel sind beispielsweise Fischleim, Knochenleim, Hasenhautleim, Haut Leim (tierische Leime), Chitin, Chitosan (aus Schalentieren), Alginat (aus Braunalgen), Lignin, Reisstärke, Lupinen, Soja, Spirulina, Karnaubawachs, Bienenwachs (natürliche Wachse), Gummi Arabicum, Gummi Sandarak, Gummi Tragant, Gummi Karaya, Pflanzenschleim (zb. Leinsamen oder Malven), Pektin, Tannin, Schellack, Pinienharz, Eialbumin, Blutalbumin, Gallapfel-Tannin, Lanolin, Dextrin (aus Stärke), Borax, Keton Harz, Stearin, Dammarharz, Kolophonium (Baumharz, kann chemisch modifiziert sein), Alginat, Lignin, Stärke (Mais-, Kartoffel- oder Reisstärke), Pflanzenproteine (Soja, Lupinen, Erbsenprotein), Dextrin, Cellulose & Hemicellulose, Tylose, fermentierte Stärke, Milchsäure, Holzteer, Enzymatisch aktivierte Lignine, Damm Harz, Kolophonium, uvm.

Zudem kann der Faser-Schicht und/oder der Schäben-Schicht ein organischer Zuschlagstoff beigemischt werden. Mithilfe dieser Zuschlagstoffe kann die Festigkeit des Faserverbundwerkstoffes maximiert werden, und auch das Gewicht minimiert oder maximiert werden. Der organische Zuschlagstoff kann ausgewählt werden aus der Gruppe umfassend: Ziegelmehl (puzzolanisches Material), Polymere, Flugasche, Holzkohle, Hüttensand, Silika-Rauch, Basaltfasern, Kalksteinmehl, Schwimmschlamm, Betonit, Recyclingmaterialien (Glas, Stein, ect), Flussspat, Zeolit, Puzzolane, Glasfaser, Vulkanasche (Puzzolan), Metakaolin (gebrannter Ton), Zeolith, Kohle, Trass, Kieselgur, Dolomitenmehr, Marmormehr, Mergel, Ton/Lehm, Perlit & Vermiculit, Bentonit, Sepiolith, uvm. oder eine Kombinationen daraus.

In einer bevorzugten Ausführungsvariante weist die Oberfläche des Faserverbundwerkstoffs Erhebungen und Vertiefungen auf. Die Oberfläche wird dabei bevorzugt durch die Faser-Schicht gebildet. Außerdem kann auch eine innenliegende Schicht, bevorzugt eine Faser-Schicht, des Faserverbundwerkstoffes Erhebungen und Vertiefungen aufweisen.

Die Erhebungen und Vertiefungen ermöglichen die Absorption und Diffusion von Schallwellen, die auf die Oberfläche treffen. Das heißt die Erhebungen und Vertiefungen erlauben eine verbesserte Schallisolierung durch den Faserverbundwerkstoff. Das Erstellen von räumlich gekrümmten, geknickten, gefalteten bzw. dreidimensionalen Formelementen als akustisch oder wärmedämmend wirksame Elemente mit einer dreidimensionalen Oberfläche ist bei bekannten Baustoffen konstruktiv aufwändiger und teurer als planare, akustisch oder wärmedämmend wirksame Elemente.

Erfindungsgemäß kann die Oberfläche des Formteils, vorzugsweise die außen liegende Faser-Schicht, sowohl eine planare Ebene als auch eine reliefartige, das heißt einfach- / doppelgekrümmte, gefaltete, oder geknickte, Oberfläche haben, ohne bei der Herstellung sehr viel aufwändiger oder teurere zu sein als planare Elemente. Im Herstellungsverfahren kann eine Press-Form bzw. Schalung, welche für eine gewünschte Form angefertigt wurde, beliebig oft verwendet werden. Bevorzugt umfasst die Press-Form eine Negativform, welche der gewünschten Form der Oberfläche des Formteils entspricht. Somit bilden sich beim Pressvorgang an der die Oberfläche bildenden Faser-Schicht automatisch die gewünschten Erhebungen und Vertiefungen, welche nach Entnahme aus der Press-Form während des Trockungsprozesses aushärten.

Die Erhebungen und Vertiefungen können geometrische, asymmetrische oder symmetrische, konkave und/oder konvexe Krümmungen, Faltungen, einfach oder doppelt gekrümmte Formen aufweisen.

Durch die dreidimensionale Oberfläche wird die Schalldiffusion und damit das Klangbild positiv beeinflusst, zudem kann die Lichtreflexion verbessert werden. Die dreidimensionale Oberflächenstruktur zur Absorption und Diffusion von Schallwellen in Form von Erhebungen und Vertiefungen könne beispielsweise als harmonisch fließende Wellenformen, in streng geometrischer Gestaltung in Kuppel-, Streifen-, Wellen- Würfel oder Waffelform oder auch als unregelmäßige Anordnung mit oder ohne Wiederholungen ausgeführt sein, um optische und gestalterische Effekte zu erzielen.

Eine innenliegende dreidimensionale Oberfläche einer Zwischenschicht, vorzugsweise einer Faser-Schicht, ergibt verbesserte bauphysikalische Eigenschaften für ein Formteil.

Die Fasern für die Faser-Schicht können eine bevorzugte Länge aufweisen, beispielsweise können sie länger als 5cm, bevorzugt länger als 10 cm sein. Außerdem können die Fasern z.B. geschnitten, gehackt, als Ganzes, verfilzt, verflochten oder gespleißt sein. Besonders bevorzugt sind die Fasern biologisch abbaubar.

Die Kalkmischung für die Faser-Schicht kann im Herstellungsverfahren beispielsweise mit einem Rührgerät, händisch/manuell, einem Betonmischer, einem Handrührgerät, oder einem Horizontalmischer vermischt werden.

In einer Ausführungsvariante ist vorgesehen, dass das Füllmaterial, also die Schäben, eine Rohdichte von unter 300kg/m³ aufweist. Dies führt zu einem besonders hohem Wärmedämmwert, wie auch Schallabsorptionsgrad. In einer Ausführungsvariante ist vorgesehen, dass das Füllmaterial eine Länge von 5-50mm, vorzugsweise 20-30mm, aufweist. In einer Ausführungsvariante ist vorgesehen, dass das Füllmaterial eine Länge von 100mm, vorzugsweise bis zu 250mm, aufweist. Auch diese Maßnahme erhöht die Fähigkeit des Formteils den auftreffenden Schall zu absorbieren, streuen, diffundieren oder reflektieren.

Der erfindungsgemäße Faserverbundwerkstoff kann mithilfe des erfindungsgemäßen Verfahrens auf sehr einfache Weise hergestellt werden. Außerdem kann aus dem Faserverbundwerkstoff jegliches Formteil gebildet werden, daher ist der Faserverbundwerkstoff sehr vielfältig einsetzbar.

### DETAILLIERTE BESCHREIBUNG DER ERFINDUNG

Weitere Vorteile und Details der Erfindung werden nachfolgend anhand der folgenden Figuren und Beispiele erläutert, ohne dass diese einschränkend zu verstehen sind.

Dabei zeigen:
- Fig. 1: ein beispielhaftes Formteil aus dem erfindungsgemäßen Faserverbundwerkstoff mit einer Faser-Schicht und einer Schäben-Schicht und einer reliefartigen Oberfläche.
- Fig. 2: ein beispielhaftes Formteil aus dem erfindungsgemäßen Faserverbundwerkstoff mit zwei Faser-Schichten und einer Schäben-Schicht und einer reliefartigen Oberfläche.
- Fig. 3a und 3b: zwei zusammengesetzte Formteile gemäß Fig. 2 und Fig. 1 mit zwei dreidimensionalen Oberflächen (Fig. 3a) und einer dreidimensionalen Oberfläche und einer innenliegenden Zwischenschicht mit dreidimensionaler Oberfläche (Fig. 3b).
- Fig. 4a und 4b: ein beispielhaftes Formteil aus dem erfindungsgemäßen Faserverbundwerkstoff mit einer(zwei) Faser-Schicht(en) und einer Schäben-Schicht und einer planaren Oberfläche.
- Fig. 5a und 5b: ein rohrförmiges Formteil aus dem erfindungsgemäßen Faserverbundwerkstoff in einer einteiligen (Fig. 5a) und einer zweiteiligen (Fig. 5b) Variante.
- Fig. 6: ein Formteil in Form eines Dach-Paneels aus einem erfindungsgemäßen Faserverbundwerkstoff.
- Fig. 7a - 7c: ein Pressverfahren zur Herstellung eines Formteils aus einem erfindungsgemäßen Faserverbundwerkstoff, in Fig. 7a der Pressvorgang mit negativ Press-Form, in Fig. 7b der gepresste Faserverbundwerkstoff samt negativ Press-Form und in Fig. 7c der Faserverbundwerkstoff getrennt von der negativ Press-Form.

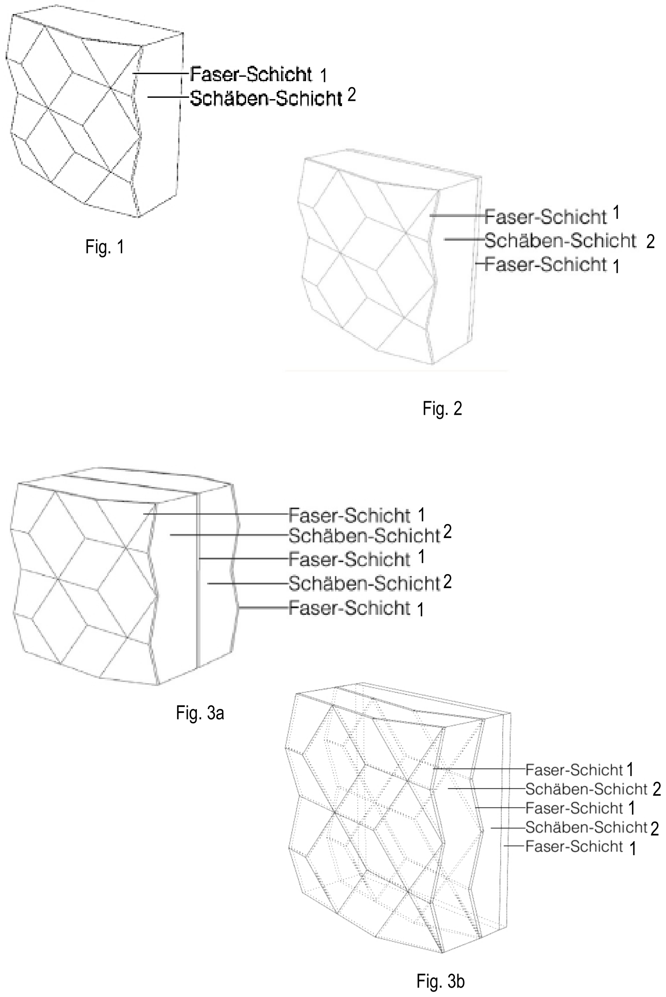

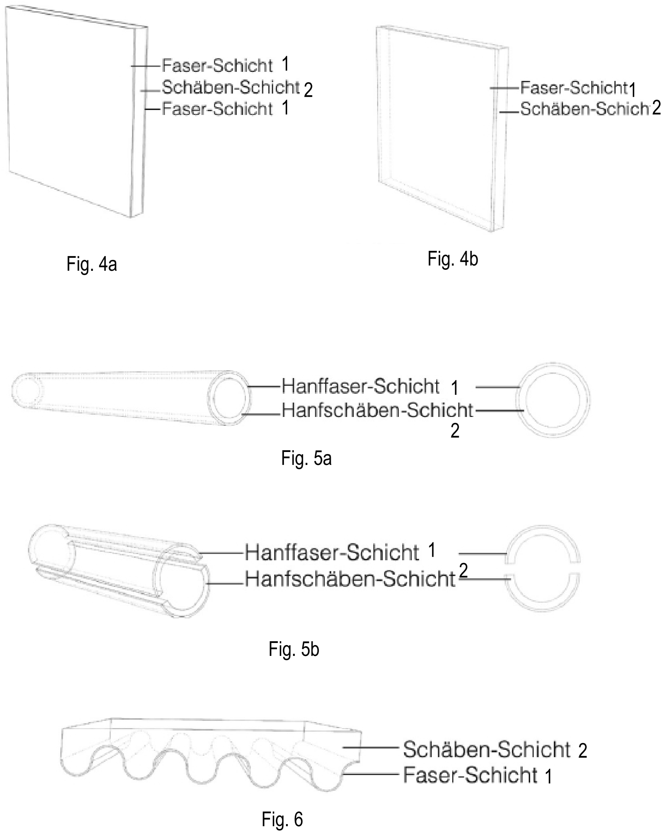

Die Erfindung betrifft einen organischen Faserverbundwerkstoff mit mindestens einer Faser-Schicht 1 und mindestens einer Schäben-Schicht 2 wie in Fig. 1 bzw. Fig. 4b dargestellt. Die Faser-Schicht 1 wird dabei aus Naturfasern, Wasser, Kalk und gegebenenfalls weiteren Bindemitteln und Zuschlagstoffen gebildet und die Schäben-Schicht 2 wird aus Schäben, Wasser, Kalk und gegebenenfalls weiteren Bindemitteln und Zuschlagstoffen gebildet. Bevorzugt umfasst die Faser-Schicht 1 im Wesentlichen nur Fasern und keine Schäben und die Schäben-Schicht 2 im Wesentlichen nur Schäben und keine Fasern.

Wie in Fig. 2 und 4a dargestellt, kann der Faserverbundwerkstoff in einer Ausführungsvariante eine Sandwich-Form aufweisen, in welcher eine Schäben-Schicht 2 von zwei Faser-Schichten 1 eingeschlossen wird. In diesem dreischichtigen Aufbau bilden die Faser-Schichten 1 somit die beiden Oberflächen des Faserverbundwerkstoffes.

Der Faserverbundwerkstoff kann auch jegliche andere Schicht-Kombination aufweisen. Es können beliebig viele Faser- und Schäben-Schichten 1, 2 übereinander angeordnet werden. In Fig. 3a und 3b ist beispielsweise ein Faserverbundwerkstoff mit drei Faser-Schichten 1 und zwei Schäben-Schichten 2 gezeigt.

Wie beispielsweise in den Figuren 1 - 3 dargestellt kann die Oberfläche des Formteils, welche der Faser-Schicht 1 entspricht, Erhebungen und Vertiefungen, das heißt eine reliefartige Oberfläche, aufweisen. Die Oberfläche kann jedoch auch wie in Fig. 4a und 4b gezeigt planar sein.

Aus dem Stand der Technik sind verschiedene akustische Paneele zur Absorption aus Hanf-Kalk bekannt. In der Regel werden solche Paneele hergestellt, indem nur Hanf-Schäben mit Kalk planar miteinander verpresst werden, und nur als Absorber wirken. Gewünschte Erhebungen und Vertiefungen werden meist mittels CNC-Fräse erzeugt. Auch ist es bekannt, auf plattenförmige Gebilde, Vliese und Matten z.B. aus Naturfasern, Mineral- und Steinwolle, Kunststoffen, Textilien usw. aufzubringen, die als Wand- oder Deckenpaneel oft auch mit einem Rahmen und Filz kaschiert werden. Bei den aus dem Stand der Technik bekannten Lösungen ist es sehr aufwendig, die sichtbaren Oberflächen mit einer Oberflächenstruktur mit unterschiedlichen Erhebungen und Vertiefungen zu realisieren, mit denen ein hoher Schallabsorptions-/diffusionsgrad erzielt werden kann.

Durch die neu entwickelte Kombination aus unterschiedlichen Schichten 1, 2 ist das Erstellen von räumlich gekrümmten, bzw. dreidimensionalen Platten als akustisch wirksamen Formen bzw. akustisch wirksamen Bauteilen mit einer dreidimensionalen Oberfläche konstruktiv nicht aufwändiger oder teurer als die Herstellung von planaren akustisch wirksamen Elementen. Die Erhebungen und Vertiefungen an der Oberfläche des Faserverbundwerkstoffes und das erfindungsgemäße Herstellungsverfahren ermöglichen daher Paneele/Bauteile/jegliche andere Formen mit einer akustisch wirksamen Oberfläche einfach und kostengünstig herzustellen.

In einer Ausführungsvariante ist vorgesehen, dass das Füllmaterial, also die Schäben, eine Rohdichte von unter 300kg/m³ aufweist. Dies führt zu einem besonders hohem Wärmedämmwert, wie auch Schallabsorptionsgrad. Eine Rohdichte von unter 300kg/m³ ermöglicht z.B. eine hohe Wärmeleitfähigkeit von max. 0,06/0,07 W(mK) und einen Wärmedurchgangskoeffizient in W(m²K) von max. 0,17 bei einer Dicke des Formteils von 35cm.

Die Rohdichte bzw. das Raumgewicht ist die Dichte eines porösen Festkörpers basierend auf dem Volumen einschließlich der Porenräume. Möglich ist, die Faser-Schicht 1 mit mehr Druck zu pressen, um eine höhere Dichte zu erzielen, was wiederum bessere Diffusionswerte ergibt und die Schäben-Schicht 2 mit weniger Druck zu pressen, um die Dichte unter 300kg/m3 zu halten, um einen verbesserten wärmedämmenden oder Absorptions-Effekt zu erzielen.

Bei Bedarf können die einzelnen Schichten 1, 2 mit unterschiedlich viel Druck verpresst werden.

In den Ausführungsvarianten der Erfindung kann vorgesehen sein, dass die Oberfläche des hergestellten Formteils bevorzugt, porös oder bevorzugt glatt ausgeführt wird, was die Akustikeigenschaften verbessern kann, je nach Bevorzugung einer Schallabsorption oder/und Schalldiffusion. Diese Porosität wird im Wesentlichen vom Verhältnis Faseranteil zu Kalkanteil zu Wasseranteil zu potentiellen Zuschlagstoff-Anteilen und Bindemittel-Anteilen, den verwendeten Kalken oder eventuellen Bindemitteln und der Kompression beim Verdichtungsvorgang bestimmt. Je mehr Druck, desto höher die Dichte, desto schwerer das Formteil und desto niedriger die Wärmedämmleistung. Je mehr Faseranteil, und je weniger Kalk und je mehr Bindemittel, desto leichter und besser die Schallabsorption und leichter an Gewicht.

In einem Aspekt der Erfindung kann vorgesehen sein, dass an der der Oberfläche abgewandten Seite eine korrelierende Struktur zu den Vertiefungen und Erhebungen vorgesehen ist, sodass die Dicke des Formteils trotz der unterschiedlichen Erhebungen und Vertiefungen im Wesentlichen konstant ist.

Bevorzugt ist vorgesehen, dass der Gesamthöhenunterschied zwischen Erhebungen und Vertiefungen mindestens 0,1mm vorzugsweise bis zu 50mm beträgt oder mehr. In einer Ausführungsvariante wurden 2mm bis 10 mm angewendet. Der Gesamthöhenunterschied bei großformatigen Platten z.B. Fassadenplatten oder Eingangshallen, Hörsälen, Alleinstehenden/im Raum stehenden/etc. Elementen kann aus gestalterischen oder akustischen Gründen auch bis zu 300mm oder 500mm oder mehr betragen.

Auch ist es möglich, dass die Oberflächenstruktur Erhebungen und Vertiefungen aufweist, deren Gesamthöhenunterschied nur wenige Millimeter beträgt, zum Beispiel bei einem Deckenpaneel/abgehängter Rasterdecke, usw. mit Relief, das unauffällig zum Einsatz kommen soll.

Zudem können beispielsweise auch trog- oder wannenförmige Platten auch mit organisch fließenden Formen wie z.B. in Form einer künstlerischen Skulptur mit einer Höhe bis zu 5m gestaltet werden, die einzeln oder auch in Gruppen an der Wand oder Decke, auch freistehend eingesetzt werden können. Bei einem freistehenden oder freihängenden Einsatz können beide oder alle Seiten als Sichtseiten ausgeführt und dementsprechend gestaltet werden. Es können auch zwei Platten mit ihren Rückseiten aneinander montiert werden, siehe z.B. Fig. 3a. Außerdem können auch zwei Platten mit einander zugewandten dreidimensionalen Oberflächen aneinander montiert werden, siehe Fig. 3b, sodass sich im Inneren des Formteils eine dreidimensionale Zwischenschicht ergibt.

Die reliefartige Oberfläche bietet folgende verbesserte Eigenschaften:
(a) streut den Schall, wirkt als Schalldiffusor: Ein Anteil wird wieder in den Raum zurückreflektiert, gute Eigenschaften bei hohen Tönen (zb. Mensa, Geschirr/Hörsaal, etc.)
(b) unterschiedliche Absorber stärken und dadurch auch unterschiedliche Frequenzbereiche, in denen der Absorber gut wirkt
(c) verbessert Schalldämmungseigenschaften/Schallabsorptionsvermögen durch Vergrößerung der Oberfläche
(d) verbesserte akustische Wirkung der Räume
(e) Ästhetische Ansprüche/Design möglich

Der reflektierte Anteil wird an der reliefartigen Oberfläche gebrochen und in unterschiedliche Richtungen zurück reflektiert.

Die Wahl der Dicke des Paneels wird überwiegend von Wärmedämmeigenschaften bestimmt, aber auch von Kosten-Nutzungsverhältnis und Schallabsorption/-diffusion. Die erfinderischen Formteile können einen Wärmeleitkoeffizient von unter 0,06 W/mK aufweisen, einen Schallabsorptionsgrad von ungefähr 0,8 oder mehr.

In einer Ausführungsvariante wurde der akustische Wirkungsgrad des erfindungsgemäßen Formteils erhöht, indem akustisch wirksame Vliese an der Rückseite oder Vorderseite befestigt wurden. Dieses Vlies kann bereits im Herstellungsvorgang miteingebracht oder nachträglich aufgebracht werden. Es ist zu 100% natürlich/biogen.

Besonders bevorzugt ist, dass das fertige Formteil, z.B. Paneel oder Bauteil, nach DIN EN 13432 zu 100% biologisch abbaubar ist. Dies wird erreicht, indem das gesamte Formteil aus Materialien biogenen Ursprungs besteht.

Daher ist eine Ausführungsvariante vorgesehen, dass das Formteil im Wesentlichen ausschließlich Materialien aufweist, die nach DIN EN 13432 biologisch abbaubar sind.

Die Oberflächenstruktur des Formteils ist vorzugsweise derart gestaltet, dass die Schalldiffusion und/oder Lichtreflexion verbessert wird. Im Falle einer Platte als Formteil können diese Strukturen beispielsweise als in sich geschlossene Form unabhängig von einer Nachbarplatte auch alleinstehend ausgeführt sein, oder aber mit Rapport an das Muster der vier möglichen Nachbarplatten anschließend ausgeführt sein. Dazu kann beispielsweise der linke Rand der Platte so ausgeführt sein, dass der rechte Rand ohne Unterschied in Orientierung und Höhe in eine Nachbarplatte übergehen kann, die die gleiche Form aufweist. In einer Ausführungsvariante kann vorgesehen sein, dass die Oberflächenstruktur der Platte fließende Anschlussmöglichkeiten zu den Nachbarplatten in alle 4 Richtungen erlaubt (Rapport).

In einer Ausführungsvariante kann vorgesehen sein, dass im Inneren des Formteils zumindest bereichsweise elektrische Leitungen, hydraulische Leitungen, Datenleitungen, Rohre, Schläuche, Leerrohre oder Aussparungselemente vorgesehen sind. In einer Anwendung des Faserverbundwerkstoffes bei Bestandsgebäuden können Trägerkonstruktionen mitgedacht werden, oder andere etwaige Aussparungen.

Zusätzlich können Gestaltung und Anordnung dieser Krümmungen in unterschiedlichen Ebenen und Größenordnungen erfolgen, die auch miteinander korrelieren können. Die Abmessung der Erhebungen und Vertiefungen haben einen Einfluss auf die Reflexion des Schalls.

Flächen, deren Abmessung vergleichbar mit der Wellenlänge (frequenzabhängig) ist, tragen zu der diffusen Schallreflexion bei. Je tiefer die Frequenz, desto größer muss auch die Tiefe/Breite des Reliefs sein. Im wichtigsten Frequenzbereich der Sprache (500 bis 1000 Hz) beträgt die optimale Breite der konvexen und konkaven Krümmungen 0,5 bis 1,0 m und die Tiefe 0,1 bis 0,5 m. Für eine gute Schalldiffusion, innerhalb des Frequenzbereiches 500 - 100Hz, kann beispielhaft eine Krümmung des gesamten Paneels mit 50 cm Radius (bis zu 100 cm) und einer Amplitude von 10 bis 50 cm, beispielhaft von 20 cm vorteilhaft sein, während zugleich eine niedrige Struktur mit "Mikrogeometrie" an der Oberfläche des gekrümmten Paneels mit beispielsweise 0,01m Höhe für gute Schallabsorption und eine verlaufende Wellenform mit bis zu 0,05m Höhe optisch und designtechnische Ansprüche erfüllt.

Der erfindungsgemäße Faserverbundwerkstoff kann beispielhaft angewendet werden als Wärme-Akustik-Dämm-Paneel für Bestandsgebäude, als nachträgliche Innen-/Außenwanddämmung oder als Innen-/Außenwand für Neubauten. Im Anwendungsbereich bei Bestandsgebäuden, hat das Paneel mindestens eine planare Außenfläche, um es auf Bestandswände besser montieren zu können, oder im gegebenen Fall zu verkleben.

Auch findet der Faserverbundwerkstoff in weiteren Gebieten, wo Wärme- oder Akustikdämmung gebraucht wird, Anwendung. Wie zum Beispiel bei Rohren oder Leitungen, industriellen Anlagen und Maschinen, Tank-/Lagerbehälter usw.

Der Faserverbundwerkstoff in Anwendung als Beispiel zum Dämmen von Rohren oder Leitungen wie in Fig. 5a und 5b gezeigt, kann durch eine angefertigte Halbschalung verpresst werden und um das Rohr mit den jeweiligen zwei Hälften montiert werden, siehe Fig. 5b. Auch ist es möglich die Dämmung als Ganzes herzustellen, siehe Fig. 5a, dafür wird lediglich ein Musterstück mit dem richtigen Durchmesser als Innenschalung mit dem Faserverbundwerkstoff verpresst und danach wieder entfernt und übrig bleibt ein Vollwärmedämmrohr.

Der erfindungsgemäße Faserverbundwerkstoff als Bauteil verpresst ist besonders gut für Bestandsgebäude, wie auch für die schon vorhandenen abgehängten Rasterdecken geeignet, da sie in diesen Räumen sowohl für eine gute Wärmedämmung als auch für eine gute Schalldämmung und Akustik sowie für ein gesundes Raumklima sorgen. Dabei können sie ganz einfach die Bestehenden ersetzten. Mehrerer Faser-Schichten in Kombination mit einer oder mehreren Schäben-Schichten erweitern die Anwendungsmöglichkeiten und Vorteile, auch für den Neubau oder Anbau von Gebäuden.

Der Faserverbundwerkstoff findet auch Anwendung als gedämmte oder ungedämmte Dach-/Fassaden-/Wellplatte, siehe Fig. 6. Der Faserverbundwerkstoff findet auch Anwendung als Verbundstoff/Kleber zwischen zwei Materialien, welche unterschiedlich, oder selbig sein können. Es kann jegliches Material und jegliche Form sein (natürlich, künstlich, planar, doppelt-/einfachgekrümmt, spitz, rund, usw.) Der Faserverbundstoff kann eingesetzt werden, um eine stabile, wetterressistente Verbindung zwischen zwei Materialien zu erzeugen.

Die Material-Kombination des erfindungsgemäßen Faserverbundwerkstoffes bietet folgende positive Eigenschaften:
(a) Brand- und Schimmelresistent
(b) Gesundes Raumklima: atmungsaktiv, feuchtigkeitsregulierend, antibakteriell, schädlingsresistent, geruchsbindend/absorbierend (Rauch/Gestank)
(c) Leicht an Gewicht
(d) Herstellung bindet mehr CO2 als sie verursacht - eine negative CO2 Bilanz
(e) Nach dem "cradle to cradle Prinzip", zu 100% in die Natur rückführbar, oder zu 100% wiederverwendbar als Faserverbundwerkstoff: erfüllt die Anforderungen an eine 360Grad Kreislaufwirtschaft
(f) die spezifische Oberflächenstruktur verbessert die Druckfestigkeit und akustische Eigenschaften
(g) Verwendung der vorzugsweise Hanffaser für erhöhte Flexibilität, geringes Gewicht und Materialeinsparung.

Besonders bevorzugt wird der Faserverbundwerkstoff aus den Fasern und Schäben von Hanf gebildet. Die Kultivierung, wie Verwendung von Hanf bietet folgende verbesserte Eigenschaften:
(a) Phytosanierung der Felder
(b) keine Verwendung von Pestiziden, Dünger oder Herbiziden
(c) schnell wachsender Rohstoff, auch als Zwischenfrucht geeignet
(d) wächst auf fast allen Böden, benötigt nur wenig Wasser
(e) Bodenverbesserung durch Lockerung des Bodens, wie Nährstoffanreicherung
(f) CO2 negativer Rohstoff

Das Recycling, die Rückführung in die Natur bietet folgende verbesserte Eigenschaften:
(a) Düngung und Kalkung/Alkalisierung der Felder
(b) Bodenrückgewinnung, wie Humusaufbau

Die Kombination aus mindestens einer dichten Faser- Schicht 1 mit mindestens einer porösen Schäben-Schicht 2 zu einem Formteil bietet folgende verbesserte Eigenschaften:
(a) Wärmedämmung
(b) Schalldämmung
(c) Brandschutz
(d) kein Verputzen oder Verkleiden.

Bevorzugt wird die Nutzpflanze Hanf als Faserpflanze verwendet. Hanf kann großflächig angebaut werden steht als Ausgangsstoff in ausreichender Menge zur Verfügung. Im Vergleich liefert ein Hektar Hanf so viel Zellstoff wie 120 Hektar Bäume. Hanf ist nach 3 Monaten erntereif und kann bis zu dreimal im Jahr gepflanzt werden. Ein Hektar Hanf bindet 9-15 Tonnen CO2, was einem jungen Wald entspricht. Hanf hilft als Zwischenfrucht der Fruchtfolge, reichert brachliegende Felder mit Nährstoffe an und kann fast überfall gepflanzt werden. Für die Kultivierung sind keine Pestizide, Fungizide oder Herbizide nötig, auch externe Bewässerung braucht die Pflanze nicht.

Wie bereits oben beschrieben, ist der Einsatz von Naturfasern häufig mit dem Problem verbunden, dass in Folge der teilweise leichten Entflammbarkeit von biologischen Fasern bzw. deren Empfindlichkeit gegen Schädlinge entsprechend chemisch-biologisch wirksame Zusätze erforderlich sind. Um eine entsprechende Schutzwirkung zu erreichen, werden meistens Imprägnierungen mit Salzlösungen oder anderen Substanzen, die als Flammenhemmer, Insektizide, Fungizide dienen vorgenommen, die entweder nur an der Faseroberfläche haften oder durch Nassimprägnierung in die Faser eingebracht werden. Solche Stoffe stellen ein Umweltgefahrenpotenzial dar, da die Stoffe insbesondere bei der Verarbeitung Dioxin entstehen lassen können. Durch die Kombination mit verschiedenen Kalken (hydraulische und/oder natürlich hydraulische Kalke und optional etwaige natürliche Bindemittel), sind beide dieser Probleme gelöst, denn durch die Beimengung ist der Faserverbundwerkstoff Brand-, Schimmel- und Schädlingsresistent. Durch die Verwendung verschiedener Bindemittel bleibt das Formteil formstabil, Wetter-resistent und wasserabweisend und verhindert so, dass sich Schädlinge einnisten können.

Besonders bevorzugt wird die Faser-Schicht 1 aus der Rohfaser, ohne zusätzlicher chemischer Behandlung hergestellt. Bevorzugt wird die Hanffaser verwendet, wobei der Hanfstängel frisch vom Feld oder getrocknet gebrochen wird, um die Faser von den Schäben (Holzkern) zu trennen. Falls notwendig zerkleinert (geschnitten, gehackt, etc.) und anschließend verwendet. Das sogenannte "brechen" des Stängels erfolgt mechanisch oder händisch. Davor werden die Blätter, im gegebenen Fall auch die Samen/Blüten und die Wurzeln, ebenfalls mechanisch oder händisch vom Stängel entfernt. Übrig bleibt der Hanfstängel, welcher maschinell oder händisch mehrfach gebrochen wird, um die Faser vom Stängel zu trennen. Die Fasern und Schäben weisen eine Mindestlänge von 5mm vor. Die Fasern eine Maximallänge von 2000mm, die Schäben eine Maximallänge von 100mm. Des Weiteren können die Fasern eine Länge von bis zu 2000mm oder mehr und die Schäben eine Länge von bis zu 100 mm oder mehr aufweisen. Die Hanffaser zeichnet sich durch ihre Reißfestigkeit und besonders dünne Materialstärke aus. Durch die Verwendung von Hanffasern wird die Flexibilität und die Biegezugfähigkeit erhöht und an Gewicht und Material eingespart. Die Hanfrohfaser wird dabei als Bewehrung genutzt und profitiert von einer bevorzugten Mindestlänge der Hanffasern von 5 cm.

Die zur Anwendung kommenden Fasern können verschiedene mechanische, biologische und witterungsbedingte Bearbeitungsschritte durchlaufen. Auch ist es möglich wie beschrieben die Rohfaser zu verwenden, ohne Bearbeitungsschritte, dabei muss sie lediglich vom Stängel getrennt werden. Auch ist möglich die frische Faser direkt nach dem Ernten zu verwenden, was Vorteile haben kann, da die Faser im frischen Zustand einen hohen Anteil an Lignin vorweist. Des Weiteren können verwendete Fasern, je nach benötigten Anforderungen, auf verschiedene Längen gebracht werden, z.B. hacken, reiben, schneiden, verfilzt, verflochten, etc. Wichtig ist, dass die Faser nach der Bearbeitung noch biologisch abbaubar ist.

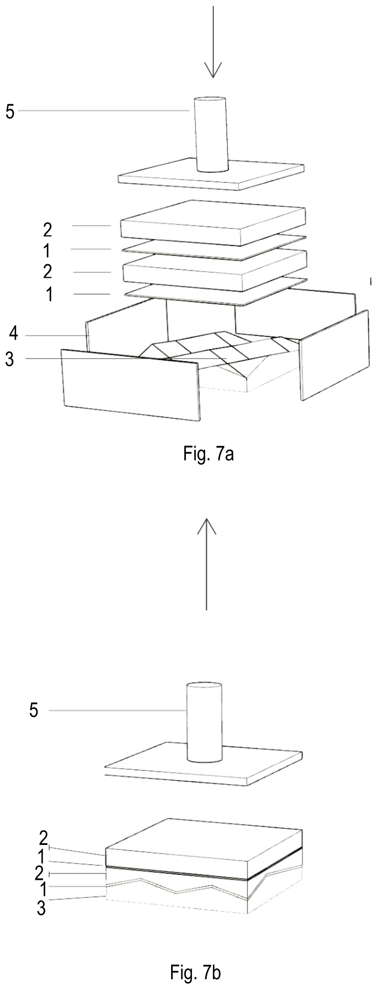

Wie in Fig. 7a dargestellt werden im Herstellungsverfahren bevorzugt die vorbereiteten Fasern in Schritt c. in die vorbereitete Press-Form/ Schalung 4 flächig verteilt und direkt anschließend die Kalkmischung flächendeckend darauf verteilt. Besonders bevorzugt werden parallel dazu die Schäben mit Wasser besprüht, bis sie kein Wasser mehr aufnehmen. Bevorzugt wird in Schritt d. ähnlich zur Kalkmischung für die Faser-Schicht 1 eine Kalkmischung für die Schäben-Schicht 2 hergestellt, danach mit den Schäben vermengt und als zweite Schicht vollflächig in der Press-Form 4 verteilt. Dabei kann die Füllmenge der Schäben-Schicht 2 zum Großteil die Stärke/Dicke des Formteils bestimmen. Bei Bedarf kann nun eine weitere Faser-Schicht 1 auf die Schäben-Schicht 2 aufgebracht werden und beliebig oft abwechselnd mit der Schäben-Schicht 2 geschichtet werden. In der beispielhaften Darstellung in Fig. 7a werden jeweils zwei Faser-Schichten 1 und zwei Schäben-Schichten 2 in die Press-Form 4 eingebracht. Der nun mindestens zweischichtige Aufbau wird zwischen Pressflächen 3, 5 einer Pressvorrichtung gepresst, wobei mindestens eine Pressfläche 3 (z.B. Pressstempel oder Druckmatrize) eine formgebende dreidimensionale Oberflächenkontur aufweisen kann. Gepresst werden kann mit einer hydraulischen Presse, manuell, händisch, etc. Wie viel Druck benötigt wird, hängt von der gewünschten Druckfestigkeit ab, z.B. von 0,1t bis 100t, bevorzugt 30-35t mittels hydraulischer Presse.

Die Schichten 1, 2 können bevorzugt für wenige Sekunden mit dem gewünschten Druck verpresst werden, kurz danach ausgeschalt werden und zum Trocknen aufgelegt oder gestellt oder gehängt werden. Besonders bevorzugt erfolgt die Trocknung demnach mittels einem natürlichen Lufttrocknungsverfahren.

Bevorzugt wird im Herstellungsverfahren des Faserverbundwerkstoffes zuerst die Negativform 3 der Press-Form 4, der gewünschten formgebenden Außenfläche, hergestellt und in eine Schalung 4 eingespannt. Die Außenschalung 4 muss mindestens die Höhe vorweisen, die das Formteil haben soll. Die Negativform 3 kann aus Holz, Kunststoff, Metall, Stein, Eisen, Beton, Ton, Styrodur, etc. bestehen. Die Negativform 3 kann aus 100% natürlichen Materialien hergestellt werden, doch beeinflusst es nicht die Qualität der Paneele, wenn die Negativform 3, worauf gepresst wird, aus nicht zu 100% biogenen Materialien hergestellt ist. Die Negativform 3 kann gefräst, geschnitzt, zusammengestückelt verklebt, usw. sein. Wichtig ist nur, dass sie dem gewünschten Druck standhält.

Die Negativform 3 kann auf der Druckmatritze befestig sein, kann aber auch als Pressstempel 5 montiert sein und von oben in die Schalung 4 drücken. Wenn sich die Negativform 3 auf der Druckmatritze befindet, drückt ein vorzugsweise planarer Pressstempel 5 auf das Formteil.

Auch ist möglich, dass auf beiden Seiten eine Negativform 3 befestigt ist, je nachdem, ob man beidseitig planar, einseitig planar oder beidseitig gekrümmt pressen will.

Die Pressform 4 ist bevorzugt unbeheizt. Die Maße oder Form der Schalung 4 ist abhängig von der Verwendung des Formteils. Die Schalung 4 kann beliebig oft verwendet werden, doch unterscheidet sie sich in Form und Größe, je nach Anwendung.

In einer anderen Ausführungsvariante ist die Pressform 4 beheizt, wodurch die Schichten der Formteile fester und dichter werden und beim Heißverpressen von Kalk können Verdichtung, beschleunigte Härtung und je nach Temperatur auch chemische Umwandlung stattfinden. Wichtig dabei ist bzgl. Ökonomie und Schall- bzw. Wärmedämmung, die Dicke der Formteile. Um eine Wärmedämmleistung zu erzielen, ist bevorzugt eine Mindestdicke von 50mm und eine Maximaldicke von 500mm gegeben, abhängig von der Verwendung (Neubau oder Bestand / Innen- oder Außenwände). Freistehende Formteile wie z.B. Skulpturen können auch beliebig dick bzw. stark bzw. tief gestaltet werden.

Um eine Akustikdämmung zu erzielen, ist bevorzugt eine Mindestdicke von 1 mm und eine Maximaldicke von 500 mm gegeben.

Bevorzugt werden die Fasern, bevorzugt Hanffasern, trocken in die Form gelegt, eine bestimmte Menge Kalkgemisch, mit vorzugsweise min. einem Bindemittel wird separat angerührt und flächendeckend darüber gegossen, wenn gewünscht kann auch vorab eine Kalkschlemme noch vor dem Einlegen der Fasern aufgebracht werden. Parallel dazu werden die Schäben mit dem Kalkgemisch vermengt und zusammen auf die Faser-Schicht 1 geschüttet. Bevor die Schäben mit der Kalkmischung vermengt werden, werden sie bevorzugt mit Wasser befeuchtet, und kurz stehengelassen, damit sie sich vollsaugen können, was verhindert, dass sie das Wasser aus dem Kalkgemisch ziehen. Anschließend werden die Schichten 1, 2 mittels Hydraulikpresse oder händisch/manuell miteinander verpresst. Das Kalkgemisch muss zügig verarbeitet werden. Bei kaltem Wasser braucht die Mischung länger bis sie "anzieht"/aushärtet. Verwendet man warmes Wasser trocknet die Mischung schneller, auch bei warmen Außentemperaturen muss man sehr schnell arbeiten, oder man mengt z.B. Zitronensäure bei, welche als Verzögerer wirkt, um an heißen Tagen Zeit zu gewinnen, um die einzelnen Schichten 1, 2 miteinander zu verpressen.

Ist das Formteil/Bauteil verpresst wie in Fig. 7b gezeigt, kann man es direkt ausschalen und zum Trocknen auflegen/hängen/stellen. Bevorzugt ist eine natürliche Lufttrocknung, bei der das Formteil rundum Luftzufuhr bekommt und etwas feucht gehalten wird. Mit Feuchtigkeit und CO2 härtet das Formteil optimal. Bei zu wenig Feuchtigkeit und zu hoher Trockenheit könne Risse etc. entstehen.

In die erste Schicht, die Faser-Schicht 1, kann min. ein Bindemittel beigemengt werden, je nachdem welche Eigenschaften man erzielen will, auch Zuschlagstoffe sind eine Option. In die zweite Schicht, die Schäben-Schicht 2 können Zuschlagstoffe und bei Bedarf Bindemittel beigemischt werden.

Das Befüllen der jeweiligen Schichten 1, 2 sollte vorzugsweise sehr zügig passieren, damit sich die jeweiligen Schichten 1, 2 optimal miteinander verkleben können, bevor sie "anziehen"/aushärten. Auch können jeweilige Schichten separat hergestellt werden und jeweils eine trockene, vorproduzierte Schicht mit einer nassen Schicht neu verpresst werden. Bevorzugt ist mindestens in einer Schicht 1, 2 mindestens ein Bindemittel beigemengt. Dies erhöht die Verbundstärke von benachbarten Schichten 1, 2. Auch kann zwischen zwei frisch angemischten Schichten 1, 2 eine bereits vorproduzierte bereits ausgehärtete Faser- oder Schäben-Schicht 1, 2 mitverpresst werden. Auch können jeweils zwei oder mehrere Schichten separat hergestellt werden und jeweils trocken miteinander verpresst werden.

Kalk härtet über mehrere Jahre weiter aus und nimmt an Festigkeit stetig zu. Dafür braucht es Wasser und Luft. Der Prozess für die vollständige Carbonisierung und Aushärtung des Kalks, kann anhand einer CO2 Kammer beschleunigt werden (+Wasser). Wird ein Bauteil über mehrere Wochen (1-4 Wochen) mit mehr als 15% CO2 begast, wird der Aushärtungsprozess, der sonst über mehrere Jahre geht, erheblich beschleunigt und das CO2 gespeichert/neutralisiert. Durch die Begasung einer überdurchschnittlichen hohen CO2 Menge, wird die Aushärtungszeit des Kalks beschleunigt, da Wasser und CO2 Zufuhr die Endfestigkeit bestimmen.

Zusätzlich ist es möglich die Bauteile ein bis drei weitere Wochen, bei konstanter Temperatur, von 21 Grad Celsius und einer Luftfeuchte von 63% zu lagern. Die hohe Luftfeuchtigkeit verhindert einen zu schnellen Trocknungsprozess, Rissbildung oder Qualitätsminderung. Kalk braucht Feuchtigkeit, um vollständig oder bestmöglich aushärten zu können. Eine Unterwasserlagerung wäre auch denkbar.

Bevorzugt werden (i) alle Schichten 1, 2 wie in Fig. 7a beispielhaft gezeigt in einem Pressvorgang zügig, ohne Wartungszeit und mit demselben Druck miteinander verpresst. Alle Schichten 1, 2 können auch unabhängig voneinander vorproduziert werden und später miteinander verpresst werden. Die Schichten 1, 2 können mit oder ohne Hitze gepresst werden.

Möglich ist auch, (ii) die Faser-/Schäben-Schicht 1, 2 vorab mit mehr oder weniger Druck zu pressen, um erst dann die Faser-/Schäben-Schicht 1, 2 nass oder trocken mit weniger oder mehr Druck drauf zu pressen und zusammen zu trocknen. Auch möglich ist (iii) die Faser-/Schäben-Schicht 1, 2 als Platte vorzuproduzieren, zu trocknen und erst im zweiten Schritt die Faser-/Schäben-Schicht 1, 2 nass darauf zu pressen. Denkbar wäre auch (iiii) die Faser-Schicht 1 und die Schäben-Schicht 3 jeweils separat voneinander vorzuproduzieren, mit unterschiedlich viel Druck zu pressen, anschließend zu trocknen und erst dann, im getrockneten Zustand auf die bereits getrocknete Faser-Schicht 1, die bereits getrocknete Schäben- Schicht 2 trocken darauf zu pressen.

Um die beiden Schichten 1, 2 im trockenen Zustand miteinander zu verkleben, kann eine Kalkmischung mit Bindemittel zwischen den zwei Schichten 1, 2 aufgebracht werden und anschließend gepresst und getrocknet werden.

Je dicker die Schäben-Schicht 2, je höher der Wärmedämm- und Absorptionseffekt.

Je dicker die Faser-Schicht 1, je höher die Festigkeit und Stabilität.

Durch die Kombination mit der Faser-Schicht 1 steigt die Druckfestigkeit enorm, auch die Festigkeit und Biegefestigkeit. Verwendet man nur die Schäben-Schicht 2 als Platte oder Bauteil, gibt es keine glatten homogenen Oberflächen, keine Druck oder Biegefestigkeit, das Bauteil hätte Mpa Werte gleich 0. Durch die Kombination mit der Faser-Schicht 1 erreicht man Werte im Bereich von 30 Mpa und mehr. Umso mehr Faser-Schichten 1 zwischen den Schäben-Schichten 2 verpresst werden, umso stabiler wird das Formteil, jedoch nicht schwerer oder dicker, daher spart man extrem an Gewicht, gewinnt an Stabilität und Festigkeit, in dem man die Faser-Schicht 1 kombiniert.

Die Faser-Schicht 1 ist im Vergleich zur Schäben-Schicht 2 in den meisten Anwendungen dünner. Beispielsweise liegt die minimale Dicke einer Faser-Schicht 1 bei 1mm, die Maximalstärke bei 300 mm. Beispielsweise kann die Minimaldicke einer Schäben-Schicht 2 1mm, die Maximalstärke 20000 mm betragen. Die dicke der Schäben-Schicht 2 hängt von der Größe der Schäben ab, je kleiner, je dünner kann man sie verpressen. Bevorzugt werden mindestens 20mm große Schäben, da der Wärmedämmeffekt, mit der Größe der Schäben steigt oder sinkt. Die Faser-Schicht 1 kann mit jeglicher Faserlänge auf 1mm verpresst werden.

Die Faser-Schicht 1 kann alleine zu einer Platte verpresst werden oder direkt mit einer oder mehreren Schäben-/Faser-Schichten 2, 1. Auch die Schäben-Schicht 2 kann allein zu einer Platte verpresst und verwendet werden. Doch entstehen durch die Kombination beider viele Vorteile, wie z.B. kein Verputzen, akustische Diffusion, Machbarkeit von komplexen Formen, wasserabweisende Oberfläche, flexible Eigenschaften, leichte Reinigung, bessere Montage, langlebiger, stabiler, etc. Die Faser-Schicht 1 fungiert auch wie eine Bewährung und gibt großen Formteilen Festigkeit und Stabilität, etc.

Für die Herstellung kann eine hydraulische Pressvorrichtung verwendet werden, doch auch händisch ist es möglich zu pressen oder frei zu formen, sofern man Gewichte oder Zwingen oder die Hände verwendet, um Druck aufzubauen. Je nach Formteil/Verwendung/Ansprüche baut man mehr oder weniger Druck auf. Je mehr Druck, desto höher die Dichte, desto weniger der Wärmdämm-/Absorptionseffekt, desto höher die Festigkeit.

Mindestens eine der Pressflächen kann mit einer formgebenden dreidimensionalen Struktur ausgestattet sein, wobei diese Struktur als Negativform 3 der gewünschten Platte ausgestaltet ist. Beispielsweise kann diese Negativform 3 harmonisch verlaufende Wellen oder auch ein streng geometrisch angeordnetes Raster aufweisen. Diese Strukturen können als in sich geschlossene Form unabhängig von einer Nachbarplatte auch alleinstehend ausgeführt sein, oder aber mit Rapport an das Muster der vier Nachbarplatten anschließend ausgeführt sein. Dazu kann beispielsweise der rechte Rand der Platte so ausgeführt sein, dass der linke Rand ohne Unterschied in Orientierung und Höhe in eine Nachbarplatte übergehen kann, die
die gleiche Form aufweisen kann oder nur mit den identischen gleichen Randpunkten anschließt und sich in der Form unterscheidet.

Das optionale Bindemittel wird vor dem Pressvorgang in die jeweilige Mischung beigemengt. Je nach Ausführungsvariante kann nur in der ersten und/oder letzten oder allen Schichten 1, 2 ein oder mehrere Bindemittel beigemengt werden.

Auch ist möglich nach dem Pressvorgang ein oder mehrere Bindemittel, einzeln oder in Kombination auf die erste oder/und letzte Schicht 1, 2 aufzusprühen/tropfen/tauchen. Das Anmischen der jeweiligen Mischungen wird pro Schicht separat vor dem Pressen vorbereitet, da sich die unterschiedlichen Schichten 1, 2 in ihrer Zusammensetzung unterscheiden können. Die Vermischung der Rohmaterialien kann vorzugsweise in einem Horizontalmischer, aber auch mit herkömmlichen Rühr und Mischvorrichtungen und auch manuell mit einem elektrischen Rührwerk oder händisch erfolgen.

Für die Füllung der Negativform 3 oder des Produktionsbandes können Bindemittel/Zuschlagstoffe/Fasern/Schäben/etc. unterschiedlicher Herkunft, Größe und Aufbereitungsart verwendet werden, um das akustische Absorptionsvermögen zu verbessern oder die mechanische Festigkeit der Platten an bestimmten Stellen/Schichten zu erhöhen. In einer Negativform 3 mit ausgeprägtem Relief/Wellen/Struktur/etc. können beispielsweise zuerst Fasern mit einer Länge bis zu 300mm, anschließend Schäben mit 5mm und darauf eine Schicht Fasern mit 20mm, um anschließend Schäben mit 20mm Länge eingebracht werden.

Weiters können natürliche Pigmente beigemischt werden, um die Formteile einzufärben. Hierbei kann das Pigment in die jeweilige Mischung untergerührt werden, bevorzugt in die Außenschicht. Auch ist möglich die Platten nach dem Pressverfahren mit natürlichen Pigmenten zu besprühen, zu bemalen, einzutauchen, aufzurollen, zu bestrahlen oder auf eine andere Art und Weise zu behandeln, um die Eigenschaften oder das Erscheinungsbild zu verändern oder im gegeben Fall zu verbessern. Wichtig dabei ist, dass es sich um natürliche Pigmente handelt, die biologisch abbaubar sind. Auch Holzkohle kann zum Einfärben verwendet werden.

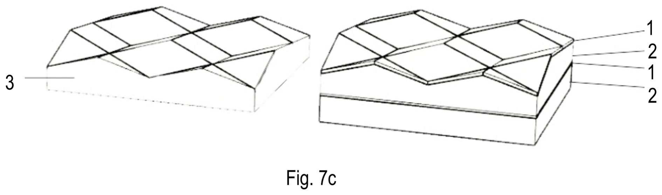

Nach dem Pressvorgang wird die Schalung 4 entfernt und das Formteil von der Negativform 3 getrennt, wie in Fig. 7c beispielhaft dargestellt, und das Formteil für mehrere Stunden/Tage/Wochen getrocknet. Die Trocknung ist abhängig von den Außentemperaturen. Falls notwendig, kann man externe Wärme zuführen, um den Trocknungsverlauf zu beschleunigen. Je nach Dicke und Dimensionen und Temperatur braucht das Formteil länger oder kürzer zum Austrocknen. Bevorzugt wird das schonende Luftrocknungsverfahren. Als Trennschicht zwischen Negativform 3 und Formteil kann z.B. eine dünne Folie oder andere Trennmittel verwendet werden.

Eine weitere beispielhafte Variante ist gegeben aus einer Kombination aus zwei oder mehreren Faserstoffen mit verschiedenen Längen, sowie auch die Beimischung von Pflanzenmaterial, das Lignin enthält und die Qualität des Produktes, z.B. hinsichtlich Schädlings Resistenz, erhöht, was in Frage kommt, wenn der Kalkanteil z.B. nur bei 1% liegt. Dies kann z.B. durch das Beimengen von Rainfarn erfolgen. Auch kann nur die Faser in ein Bindemittel eingelegt werden, bevor es mit Kalk verpresst wird.

Durch die Verwendung von hydraulischen und hydraulisch natürlichen Kalken ist das Produkt brand- und schädlingsresistent. Dafür kann der Kalkanteil bevorzugt höher oder gleich hoch wie der Faser/Schäben Anteil sein.

Bei hohen Außentemperaturen kann Zitronensäure als Verzögerer beigemischt werden, was ermöglicht, dass die Mischung verzögert aushärtet, wodurch man mehr Zeit hat, die Negativform 3 mit den gewünschten verschiedenen Schichten 1, 2 zu füllen, um sie anschließend zu verpressen.

Das hergestellte Formteil kann bevorzugt porös/glatt, biegesteif/flexibel, hart/weich, leicht/schwer, etc. ausgeführt werden. Abhängig davon ist das gewählte Bindemittel und der Wasseranteil und der Kalkanteil. Umso geringer man den Wasseranteil halten kann, desto mehr Festigkeit. Je mehr Faseranteil in Kombination eines bevorzugten Bindemittel desto flexibler. Umso weniger Kalkanteil, desto geringer das Gewicht.

In einer bevorzugten Ausführungsvariante umfassen die Faser-Schicht 1 und/oder die Schäben-Schicht 2 einen Faser bzw. Schäben Anteil zwischen 20 und 50 Gewichts Prozent, vorzugsweise zwischen 35 und 40 Gewicht Prozent. Besonders bevorzugt liegt der Kalkanteil bei mindestens 1 %.

Der erfindungsgemäße Faserverbundwerkstoff zeichnet sich auch dadurch aus, dass er frei formbar ist. Außerdem kann das fertige Formteil, das heißt nach der Härtung und Trocknung, wie in der klassischen Bildhauerei bearbeitet, geschnitzt oder modelliert werden. Zugleich ist der erfindungsgemäße Faserverbundwerkstoff zu 100% natürlich und gleichzeitig wetterresistent und bildet daher ein einzigartiges Material im Kunst- und Designbereich. Somit eröffnen sich für den Faserverbundwerkstoff weitere Anwendungsmöglichkeiten wie Skulpturen, Objekte im Außenbereich, funktionale Kunst oder großformatige Installationen, welche sich problemlos auf einfache Weise umsetzen lassen. Im Gegensatz zu herkömmlichen Materialien, die entweder künstlich, empfindlich gegenüber Witterung oder schwer zu bearbeiten sind, ermöglicht der erfindungsgemäße Faserverbundwerkstoff somit auch Künstler:innen und Designer:innen ihre Ideen direkt in die Praxis umzusetzen - ohne Kompromisse bei Natürlichkeit, Nachhaltigkeit oder Langlebigkeit.

## Patentansprüche

1. Organischer Faserverbundwerkstoff umfassend Naturfasern und Schäben, vorzugsweise aus Hanf, Wasser und Kalk, vorzugsweise hydraulischen und/oder natürlich hydraulischen Kalk, **dadurch gekennzeichnet, dass** der Faserverbundwerkstoff mindestens eine Faser-Schicht (1) und mindestens eine Schäben-Schicht (2) aufweist,
wobei die Faser-Schicht (1) aus Naturfasern, Wasser, Kalk und optional weiteren Bindemitteln und Zuschlagstoffen gebildet ist,
wobei die Schäben-Schicht (2) aus Schäben, Wasser, Kalk und optional weiteren Bindemitteln und Zuschlagstoffen gebildet ist.

2. Organischer Faserverbundwerkstoff nach Anspruch 1, wobei die Faser-Schicht (1) und/oder Schäben-Schicht (2) mindestens ein organisches Bindemittel umfasst.

3. Organischer Faserverbundstoff nach Anspruch 1 oder Anspruch 2, wobei die Faser-Schicht (1) und/oder die Schäben-Schicht (2) mindestens einen organischen Zuschlagstoff umfasst.

4. Organischer Faserverbundwerkstoff nach einem der Ansprüche 1 bis 3, wobei eine Oberfläche des Faserverbundwerkstoffs Erhebungen und Vertiefungen aufweist.

5. Organischer Faserverbundwerkstoff nach einem der Ansprüche 1 bis 4, wobei die zumindest eine Schäben-Schicht (2) eine Rohdichte von unter 300 kg/m³ aufweist.

6. Organischer Faserverbundwerkstoff nach einem der Ansprüche 1 bis 5, hergestellt in einem Verfahren nach einem der Ansprüche 8 bis 10.

7. Formteil aus einem organischen Faserverbundwerkstoff nach einem der Ansprüche 1 bis 6.

8. Verfahren zur Herstellung eines organischen Faserverbundwerkstoffes umfassend mindestens eine Faser-Schicht (1) und mindestens eine Schäben-Schicht (2), umfassend die Schritte
a. Zerkleinern von Faserpflanzen, vorzugsweise Hanf,
b. Aufteilen der zerkleinerten Faserpflanzen in Naturfasern und Schäben,
c. Einbringen der Naturfasern in eine Press-Form (4) und benetzen der Naturfasern mit einem Kalkgemisch umfassend Wasser und Kalk zur Herstellung einer Faser-Schicht (1),
d. Benetzen der Schäben mit einem Kalkgemisch umfassend Wasser und Kalk und Herstellung einer fließfähigen Schäbenmasse zur Herstellung einer Schäben-Schicht (2),
e. Pressen der Faser-Schicht (1) und/oder einbringen der fließfähigen Schäbenmasse auf die Faser-Schicht (1) in die Press-Form (4),
f. Optional einbringen weiterer Faser-Schichten (1) und/oder Schäben-Schichten (2) in die Press-Form (4) gemäß Schritten c. - e.,
g. Pressen der Schichten (1,2),
h. Entnehmen des gepressten Formkörpers und Härtung und Trocknung, vorzugsweise in einem natürlichen Lufttrocknungsverfahren.

9. Verfahren nach Anspruch 8, wobei unter Schritt c. und/oder d. ein organisches Bindemittel beigemischt wird.

10. Verfahren nach einem der Ansprüche 8 oder 9, wobei unter Schritt c. und/oder d. ein organischer Zuschlagstoff beigemischt wird.
